**Europäisches Patentamt**

**European Patent Office**

**Office européen des brevets**

(19)

(11) Veröffentlichungsnummer : **0 366 010 B1**

# (12) EUROPÄISCHE PATENTSCHRIFT

(45) Veröffentlichungstag der Patentschrift :
**11.03.92 Patentblatt 92/11**

(51) Int. Cl.⁵ : **C02F 7/00,** C02F 3/26, C02F 3/20, B63B 35/00

(21) Anmeldenummer : **89119473.0**

(22) Anmeldetag : **20.10.89**

---

(54) **Mobile Vorrichtung zur Sauerstoffanreicherung von Gewässern.**

---

(30) Priorität : **28.10.88 DE 3836775**

(43) Veröffentlichungstag der Anmeldung :
**02.05.90 Patentblatt 90/18**

(45) Bekanntmachung des Hinweises auf die Patenterteilung :
**11.03.92 Patentblatt 92/11**

(84) Benannte Vertragsstaaten :
**AT BE DE FR IT NL**

(56) Entgegenhaltungen :
**EP-A- 0 044 382**
**BE-A- 895 218**
**US-A- 3 755 142**

(73) Patentinhaber : **MESSER GRIESHEIM GMBH**
**Hanauer Landstrasse 330**
**W-6000 Frankfurt/Main (DE)**

(72) Erfinder : **Gährs, Hans Jasper, Dr.**
**Novalissttrasse 12**
**W-4000 Düseldorf (DE)**
Erfinder : **Müller, Berthold**
**An der Rossmühle 1**
**W-4150 Krefeld (DE)**

---

Jouve, 18, rue Saint-Denis, 75001 PARIS

## Beschreibung

Die Erfindung betrifft eine mobile Vorrichtung (Schiff) zur Sauerstoffanreicherung von Gewässern nach dem Oberbegriff des Anspruches 1.

Durch die Belastung von Flüssen, Seen, Talsperren und anderen Oberflächengewässern mit Verunreinigungen (Ammonium, Phosphat, organische Stoffe usw.) sowie bei der Gewässerregulierung und der Einleitung von Kühlwasser kommt es direkt oder indirekt zu Sauerstoffmangelsituationen in den Gewässern mit den entsprechenden Folgeerscheinungen (Fischsterben, Absterben des Ökosystems im Wasser, Geruchsemissionen usw.)

Die Ursachen des Sauerstoffmangels in den Gewässern sind vor allem eine Überdüngung der Gewässer mit Ammonium und Phosphat und dadurch hervorgerufen ein verstärktes Algenwachstum. Beim Absterben der Algen tritt eine hohe Sauerstoffzehrung auf, die durch den natürlichen Sauerstoffeintrag in ein Gewässer nicht abgedeckt werden kann. Hinzu kommen organische Stoffe von Kläranlagenabläufen, Industrie usw., die erst in dem Gewässer biologisch abgebaut werden. Auch dafür wird Sauerstoff benötigt. Zusätzlich wird durch die Einleitung von Kühlwässern (mit einer Temperatur bis 30°C) eine verstärkte Sauerstoffzehrung herbeigeführt, da bei höheren Temperaturen die Stoffwechselvorgänge schneller ablaufen, d.h. in einer bestimmtn Zeiteinheit wird wesentlich mehr Sauerstoff für die biologische Umsetzung benötigt als bei tieferen Temperaturen. So ist besonders in den Sommermonaten in vielen Gewässern ein akuter Sauerstoffmangel vorhanden.

Zur Sauerstoffanreicherung von Gewässern sind verschiedene Verfahren bekannt, wobei grundsätzlich zwischen stationären und mobilen Sauerstoffanreicherungsanlagen unterschieden wird. Oftmals ist der Gewässerabschnitt genau bekannt, an dem Sauerstoffmangel auftritt (Kläranlagenausläufe, Kühlwassereinleitungen). Hier wird durch stationäre Sauerstoffanreicherungsanlagen, die meist mit reinem Sauerstoff betrieben werden, wobei dieser über poröse Begasungsschläuche in das Wasser eingetragen wird, Abhilfe geschaffen (siehe beispielsweise Zeitschrift "gas aktuell 35, Seiten 23-27, 1988, Herausgeber MESSER GRIESHEIM).

Bekannt sind aus der Literatur Konstruktionen, bei denen die Sauerstoffanreicherung durch Eintragsaggregate erfolgt, die auf dem Schiff installiert sind. Dazu wird z.B. bei dem DGBM 8608486 eine Wassermenge über eine Pumpe entnommen und über Reaktoren geführt, in denen unter erhöhtem Druck die Sauerstoffanreicherung erfolgt. Die angereicherte Wassermenge wird anschließend dem Gewässer über verschiedene Systeme wieder zugeführt. Bei einer aus der DE-OS 26 49 126 bekannten Variante erfolgt teilweise eine Rückführung des nicht genutzten Sauerstoffs.

Die Schiffkonstruktionen mit einer externen Sauerstoffanreicherung sind sehr aufwendig. Um eine sinnvolle Sauerstoffanreicherung in dem Gewässer sicherzustellen, müssen große Wassermengen gepumpt werden. Dies ist sehr energieaufwendig und durch Schiffsaggregate nicht zu bewältigen.

Der Platzbedarf für entsprechende zusätzlichen Aggregate ist erheblich und auf der vorhandenen Schifffläche nur so zu realisieren, daß relativ kleine Einheiten gebaut werden könnnen und dementsprechend geringe Sauerstoffeintragsleistungen vorhanden sind.

Außerdem sind die entsprechenden Aufbauten auf dem Schiff beim Befahren der Gewässer hinderlich. Insbesondere auf Flüssen und Kanälen in Stadtgebieten mit entsprechenden Brückenbauwerken ist dadurch der Einsatz dieser Schiffe sehr eingeschränkt.

Eine andere Eintragsvariante besteht gemäß den DE-PS'en 93 04 24 und 33 40 420 sowie dem DGBM 86 18 618 darin, daß Sauerstoffaggregate an dem Schiff montiert sind und durch das Wasser geschleppt werden. Die Sauerstoffanreicherung erfolgt hierbei direkt in dem Gewässer. Unterschieden wird dabei zwischen Systemen, bei denen ein optimaler Sauerstoffeintrag nur erfolgt, wenn sich das Schiff in Bewegung befindet (DGBM 86 18 618) und Systemen mit Sauerstoffeintragern, durch die ein Sauerstoff eintrag auch bei einem Stillstand des Schiffes möglich ist (DE-PS'en 93 04 24 und 33 40 420).

Bei dem Einsatz von Sauerstoffeintragungsaggregaten, die seitlich des Schiffskörpers angebracht sind (wie z.B. bei der DE-PS 33 40 420) wird die Manövrierfähigkeit des Schiffes insbesondere im Uferbereich sowie an Kaianlagen herabgesetzt.

Eintragungsaggregate , die in das Gewässer abgelassen werden (DE-PS 93 04 24 sowie DGBM 86 18 618) haben den Nachteil, daß eine Überwachung der Ablaßtiefe in Bezug auf den Gewässergrund erfolgen muß, um Beschädigungen durch Hindernisse, die sich auf dem Gewässergrund angesammelt haben, zu vermeiden.

Der Erfindung liegt die Aufgabe zugrunde, eine mobile Vorrichtung (Schiff) zur Sauerstoffanreicherung von Gewässern zur Verfügung zu stellen, die sowohl beim Bewegen als auch beim Stillstand eine hohe Sauerstofausnutzung und Sauerstoffeintragsleistung erzielt, ohne daß hierfür umfangreiche Schiffsaufbauten sowie seitliche Anbauten bzw. Ablaßtiefenüberwachungen erfoderlich sind.

Diese Aufgabe wird bei einer gattungsgemäßen Vorrichtung durch die kennzeichnenden Merkmale des Anspruches 1 gelöst. Vorteilhafte Weiterbildungen sind in den Ansprüchen 2 bis 9 angegeben.

Die mit der Erfindung erzielbaren Vorteile bestehen insbesondere darin, daß durch die am Schiffboden vorgesehenen Rohre und/oder Kanalprofile
- eine hohe Sauerstoffausnutzung erzielt wird
- keine Aufbauten benötigt werden, die die Durchfahrt von Brücken und anderen Bauwerken behindern
- keine Aggregate am Schiffskörper befestigt werden, die beim Manövrieren hinderlich sind
- der Sauerstoffeintrag unabhängig von der Gewässertiefe ist
- auch ohne Schiffsbewegung ein optimaler Sauerstoffeintrag erfolgt
- die für den Sauerstoffeintrag benötigte Energie gering ist.
- die Sauerstoffeintrager gleichzeitig als Antrieb für das Schiff verwendet werden können, wenn in den Profilen Ventilatoren zum Schiffsantrieb vorgesehen sind
- der Tiefgang des Schiffes sich nur unwesentlich verändert, da nur das Gewicht der Rohre in Rechnung zu bringen ist.

Ausführungsbeispiele der Erfindung sind in den Zeichnungen dargestellt und werden im folgenden näher beschrieben.

Es zeigen

Fig.1 erstes erfindungsgemäßes Schiff in Seitenansicht,
Fig.2 erstes erfindungsgemäßes Schiff in Vorderansicht,
Fig.3 zweites erfindungsgemäßes Schiff in Vorderansicht.

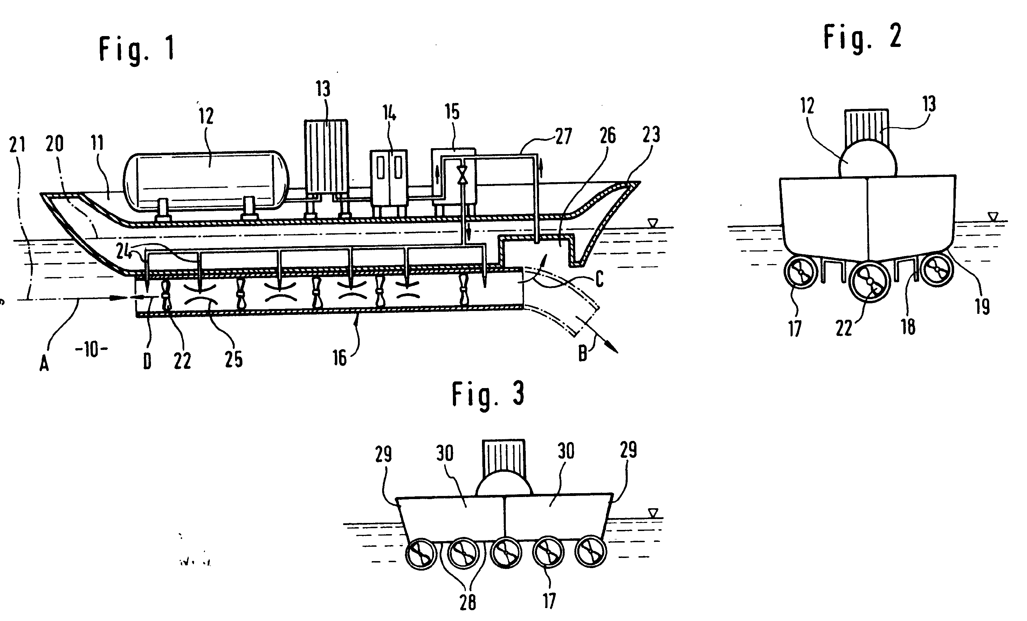

Die mobile Vorrichtung (Schiff) zur Sauerstoffanreicherung von Gewässern weist beim Ausführungsbeispiel gemäß den Fig. 1 und 2 einen auf dem Gewässer 10 schwimmenden Schwimmkörper 11 auf, auf dem eine Sauerstoffversorgungseinheit angeordnet ist, die vorzugsweise aus einem Standtank 12 zur Speicherung von flüssigem Sauerstoff, einem Verdampfer 13, einer Meß- oder Regeleinrichtung 14 sowie einem Verteiler 15 besteht. Der Verteiler 15 ist mit Sauerstoffeintragern 16 verbunden, die aus Rohr 17 und/oder Kanalprofilen 18 bestehen, die am Boden 19 des Schwimmkörpers 11 installiert sind. Die Profile 17,18 erstrecken sich über die gesamte Schwimmkörperlänge, wobei bevorzugt die Längsachen 20 bzw. 21 vom Schwimmkörper 11 bzw. den Profilen 17, 18 gleichgerichtet vorzugsweise parallel zueinander sind. In den Profilen 17, 18 ist jeweils mindestens ein Ventilator 22 installiert. Sind die Ventilatoren 22 als Antrieb für den Schwimmkörper 11 ausgebildet wird das Wasser in Pfeilrichtung A angesaugt und durch die Profile 17, 18 zum Heck 23 des Schwimmkörpers 11 befördert.

Durch den Wasseraustritt am Ende der Profile entsteht ein Impuls, der das Schiff in Bewegung versetzt. Die Profile können teilweise auch links und rechts der Schiffsseite enden, so daß gezielte Wendemanöver möglich sind bzw. nach unten geneigt, wie in Fig.1 gestrichelt angedeutet, um a) den Vortrieb des Schiffes zu begrenzen und b) das $O_2$-angereicherte Wasser in tiefere Wasserzonen umzulenken (Pfeilrichtung B).

Über den Verteiler 15 und Sauerstoffzuführleitungen 24 wird vor und/oder hinter den Ventilatoren 22 gasförmiger Sauerstoff oder sauerstoffhaltiges Gas in die Profile 17, 18 injiziert. In den Profilen geht der Sauerstoff dann weitgehend in Lösung. Bevorzugt sind zur besseren Vermischung und einer noch besseren Sauerstoffausnutzung in den Profilen 17,18 Mischelemente, vorzugsweise Diffusoren 25 angeordnet.

Zur Rückführung von nicht ausgenutztem und ausgasenden Sauerstoff ist im Heck 23 des Schwimmkörpers 11 eine Sauerstoffauffang-Kammer 26 vorgesehen, unter der die Profile 17,18 enden. Nicht in Lösung gegangener Sauerstoff steigt nach oben (Pfeilrichtung C) und wird in der Kammer aufgefangen. Von dieser wird er über eine Rückführleitung 27 den Profilen 17, 18 wieder vor oder hinter den Ventilatoren 22 zugeführt.

Zusätzlich zu der Fortbewegung des Schiffes durch den Wasserstrahlimpuls kann ein herkömmlicher Schiffsantrieb Verwendung finden.

Das Schiff kann auch nur durch einen herkömmlichen Schiffsantrieb betrieben werden und die Profile dienen lediglich zur Sauerstofflösung im Wasser. Auf die den Schiffsantrieb unterstützenden Ventilatoren kann dann verzichtet werden, da durch die Schiffsbewegung das Wasser durch die Rohre strömt und somit für die Sauerstofflösung die gleichen Voraussetzungen gegeben sind, wie bei dem Einsatz dieser Ventilatoren.

Besonders vorteilhaft ist in diesem Fall jedoch die Ventilatoren nicht als Antrieb sondern entgegen der Antriebsrichtung wirken zu lassen. Dadurch wird in den Profilen 17,18 ein Gegenstrom (Pfeilrichtung D) erzeugt, durch den je nach Druck der Ventilatoren 22 die Strömungsgeschwindigkeit des Wassers in den Profilen 17, 18 verkleinert, die Verweilzeit des Wassers in den Profilen 17,18 und damit die Sauerstofflösungszeit vergrößert wird.

Wie aus Fig.2 ersichtlich, können die Profile 17, 18 rohrförmig (Profile 17) oder kastenförmig (Profile 18) ausgebildet werden. Dabei ist der Profilquerschnitt entsprechend beliebig frei wählbar, bevorzugt ist der Rohrquerschnitt kreisförmig und der Kastenquerschnitt viereckig ausgebildet, wobei selbstverständlich nur rohrbzw. nur kastenförmige Profile nebeneinander oder beide Profilarbeiten wie bei Fig.2 abwechselnd angeordnet werden können.

Eine weitere Variante kann so konstruiert sein, daß die kastenartigen Kanäle bzw. Rohre nach unten hin offen sind und im wesentlichen aus Leitblechen bestehen, die verhindern, daß der gasförmig eingetragene Sauerstoff seitlich unter dem Schiffskörper entweicht, ohne daß er in Lösung gegangen bzw. in der Kammer aufgefangen wurde.

Beim Ausführungsbeispiel gemäß den Fig. 1 und 2 sind die Profile 17, 18 unterhalb eines Schwimmkörpers angeordnet. Diese Variante ist besonders günstig, wenn Schwimmkörper von Schiffen mit Sauerstoffeintragern gemäß der Erfindung nachgerüstet werden. Bei einem Neubau von Schiffen zur Sauerstoffanreicherung von Gewässern wird vorteilhaft der Schwimmkörper so ausgebildet, daß die Rohr- und/oder Kanalprofile Teile des Schwimmkörpers sind. Eine derartige Variante ist in Fig.3 dargestellt, bei der die Profile 17, 18 z.B. durch Bleche 28 miteinander verbunden sind und in Verbindung mit den Seitenwänden 29, 30 den Schwimmkörper bilden.

Bei beiden Ausführungsbeispielen sind am Schwimmkörper 11 und/oder den Profilen 17, 18 nicht dargestellte Meßsonden zur Sauerstoffgehaltsmessung vorgesehen. Die Ausgangssignale der Sonden werden der Meß- und Regeleinrichtung 14 zur Dosierung der Sauerstoffeintragungsmenge zugeführt. Dabei kann über die Sonden des Schiffes, vor dem Wassereintritt in die Profile am Bug eine Sauerstoffgehaltsmessung in dem Wasser erfolgen und darüber die Menge Sauerstoff oder sauerstoffhaltiges Gas vor oder hinter den Ventilatoren zudosiert wird. Eine andere Möglichkeit besteht darin, daß am Ende der Sauerstoffanreicherungsstufe im Profil eine Sauerstoffgehaltsmessung und darüber die Menge Sauerstoff oder sauerstoffhaltiges Gas vor oder hinter den Ventilatoren zudosiert wird.

Auch ist eine Regelung der Sauerstoff-Eintragsmenge durch Gehaltsmessung vor und hinter der Anreicherungsstufe möglich.

## Patentansprüche

1. Mobile Vorrichtung zur Sauerstoffanreicherung von Gewässern mit einem auf dem Gewässer schwimmenden Schwimmkörper, auf dem eine Sauerstoffversorgungseinheit angeordnet ist, die mit Sauerstoffeintragern verbunden ist, dadurch gekennzeichnet, daß die Sauerstoffeintrager (16) aus Rohr- und/oder Kanalprofilen /17 bzw. 18) bestehen, die am Boden (19) des Schwimmkörpers (11) angeordnet sind, wobei die Längsachsen (20 bzw. 21) vom Schwimmkörper (11) und Profilen (17, 18) gleichgerichtet, vorzugsweise parallel zueinander sind.

2. Mobile Vorrichtung nach Anspruch 1, dadurch gekennzeichnet, daß die Rohr- und/oder Kanalprofile ( 17. bzw. 18) Teil des Schwimmkörpers (11) sind (Fig.3).

3. Mobile Vorrichtung nach Anspruch 1 oder 2, dadurch gekennzeichnet, daß in den Rohr- oder Kanalprofilen (17, 18) jeweils mindestens ein Ventilator (22) angeordnet und die Sauerstoffzuführleitung (24) vor und-/oder hinter den Ventilatoren (22) an die Rohr- oder Kanalprofile (17, 18) angeschlossen sind.

4. Mobile Vorrichtung nach einem der Ansprüche 1 bis 3, dadurch gekennzeichnet, daß die Ventilatoren (22) als Antrieb für den Schwimmkörper (11) ausgebildet sind.

5. Mobile Vorrichtung nach einem der Ansprüche 1 bis 4, dadurch gekennzeichnet, daß in den Rohr- und-/oder Kanalprofilen (17, 18) Mischelemente vorzugsweise Diffusoren (25) angeordnet sind.

6. Mobile Vorrichtung nach einem der Ansprüche 1 bis 5, dadurch gekennzeichnet, daß die Rohr- und/oder Kanalprofile (17, 18) unterhalb einer im Heck (23) des Schwimmkörpers (11) vorgesehenen Sauerstoffauffang-Kammer (26) enden, die vorzugsweise über eine Rückführleitung (27) mit dem Rohr- und/oder Kanalprofile (17, 18) verbunden ist.

7. Mobile Vorrichtung nach einem der Ansprüche 1 bis 6, dadurch gekennzeichnet, daß der Schwimmkörper mit einem an sich bekannten Schiffsantrieb versehen ist.

8. Mobile Vorrichtung nach Anspruch 7, dadurch gekennzeichnet, daß die Ventilatoren (22) entgegen der Antriebsrichtung wirken.

9. Mobile Vorrichtung nach einem der Ansprüche 1 bis 8, dadurch gekennzeichnet, daß am Schwimmkörper (11) und/oder den Profilen (17, 18) Meßsonden zur Sauerstoffgehaltsmessung vorgesehen sind, deren Ausgangssignale einer Meß- und Regelvorrichtung (14) zur Dosierung der Sauerstoffeintragsmenge zuführbar sind.

## Claims

1. Mobile equipment for the oxygen enrichment of stretches of water, having a floating body which floats on the stretch of water and on which there is mounted an oxygen supply unit which is connected to oxygen feeds, characterised in that the oxygen feeds (16) consist of pipe and/or channel sections (17 or 18) which are mounted on the bottom (19) of the floating body (11), the longitudinal axes (20 and 21) of the floating body (11) and sections (17, 18) being aligned in the same direction, preferably parallel to one another.

2. Mobile equipment according to Claim 1, characterised in that the pipe and/or channel sections (17 or 18) are part of the floating body (11) (Fig. 3).

3. Mobile equipment according to Claim 1 or 2, characterised in that at least one impeller (22) is in each case mounted in the pipe or channel sections (17, 18) and the oxygen supply lines (24) are connected to the pipe or channel sections (17, 18) upstream and/or downstream of the impellers (22).

4. Mobile equipment according to any of Claims 1 to 3, characterised in that the impellers (22) are designed as a drive for the floating body (11).

5. Mobile equipment according to any of Claims 1 to 4, characterised in that mixing devices, preferably diffusers (25), are mounted in the pipe and/or channel sections (17, 18).

6. Mobile equipment according to any of Claims 1 to 5, characterised in that the pipe and/or channel sections (17, 18) terminate below an oxygen collection chamber (26) provided in the stern (23) of the floating body (11) and preferably connected via a return line (27) to the pipe and/or channel sections (17, 18).

7. Mobile equipment according to any of Claims 1 to 6, characterised in that the floating body is equipped with a ship's drive which is known per se.

8. Mobile equipment according to Claim 7, characterised in that the impellers (22) act against the drive direction.

9. Mobile equipment according to any of Claims 1 to 8, characterised in that there are provided on the floating body (11) and/or the sections (17, 18) measuring probes for measuring oxygen content, whose output signals can be fed to measuring and regulating equipment (14) for metering the amount of oxygen fed in.

**Revendications**

1. Dispositif mobile pour assurer l'enrichissement en oxygène des eaux à l'aide d'un bateau flottant sur les eaux, et comportant une unité d'alimentation en oxygène reliée à des injecteurs d'oxygène, dispositif caractérisé en ce que : les injecteurs d'oxygène (16) sont formés de profilés tubulaires et/ou en canal (17, 18) prévus dans le fond (19) du bateau (11) et l'axe longitudinal (20, 21) du bateau (11) et les profilés (17, 18) sont alignés et de préférence ils sont parallèles.

2. Dispositif mobile selon la revendication 1, caractérisé en ce que les profilés tubulaires et/ou en canal (17, 18) font partie du bateau (11) (figure 3).

3. Dispositif mobile selon la revendication 1 ou 2, caractérisé par au moins un ventilateur (22), respectif associé aux profilés tubulaires ou en canal (17, 18) et la conduite d'alimentation en oxygène (24) est reliée en amont et/ou en arrière des ventilateurs (22) aux profilés tubulures ou en canal (17, 18).

4. Dispositif mobile selon l'une des revendications 1 à 3, caractérisé en ce que les ventilateurs (22) servent de moyens d'entraînement pour le bateau (11).

5. Dispositif mobile selon l'une des revendications 1 à 4, caractérisé en ce que des profilés de tube et/ou canal (17, 18) comportent des éléments mélangeurs de préférence des diffuseurs (25).

6. Dispositif mobile selon l'une des revendications 1 à 5, caractérisé en ce que les profilés de tube et/ou de canal (17, 18) se terminent en dessous d'une chambre de sortie d'oxygène (26) prévue à l'arrière (25) de l'élément flottant (11), chambre qui est de préférence reliée par une conduite de retour (27) au profilé tubulaire et/ou en forme de canal (17, 18).

7. Dispositif mobile selon l'une des revendications 1 à 6, caractérisé en ce que l'élément flottant comporte un moteur de bateau connu en soi.

8. Dispositif mobile selon la revendication 7, caractérisé en ce que les ventilateurs (22) agissent en sens opposé du sens de l'entraînement.

9. Dispositif mobile selon l'une des revendications 1 à 8, caractérisé en ce que l'élément flottant (11) et/ou les profilés (17, 18) comportent des sondes de mesure pour mesurer la teneur en oxygène, sondes dont les signaux de sortie sont fournis à un dispositif de mesure et de régulation (14) pour doser la quantité d'oxygène apportée.

Fig. 1

Fig. 2

Fig. 3

6